# EUROPÄISCHE PATENTSCHRIFT

(11) **EP 2 936 389 B1**
(45) Veröffentlichungstag und Bekanntmachung des Hinweises auf die Patenterteilung: **21.09.2016**
(21) Anmeldenummer: 13821663.5
(22) Anmeldetag: 16.12.2013
(51) Int. Cl.: G06K 9/00, B60W 40/068

(54) **VERFAHREN UND VORRICHTUNG ZUM PRÄDIKATIVEN ERMITTELN EINES PARAMETERWERTES EINER VON EINEM FAHRZEUG BEFAHRBAREN OBERFLÄCHE**
METHOD AND DEVICE FOR PREDICTIVELY DETERMINING A PARAMETER VALUE OF A BY A VEHICLE DRIVABLE SURFACE
PROCEDE ET DISPOSITIF DE DETERMINATION PREDICTIVE D'UN PARAMETRE D'UNE SURFACE PRACTICABLE PAR UN VEHICULE

(30) Priorität: 19.12.2012 DE 102012024874
(43) Veröffentlichungstag der Anmeldung: 28.10.2015
(73) Patentinhaber: Audi AG, 85045 Ingolstadt (DE)
(72) Erfinder: SIEGEL, Andreas, 85049 Ingolstadt (DE); REICHEL, Michael, 85049 Ingolstadt (DE)
(74) Vertreter: Herbst, Matthias Heinz
(86) Internationale Anmeldenummer: PCT/EP2013/003784
(87) Internationale Veröffentlichungsnummer: WO 2014/095019

(56) Entgegenhaltungen:
- EP-A1- 2 282 293
- DE-A1-102005 045 017
- DE-B4-102004 023 323
- US-A1- 2010 098 297
- US-A1- 2012 008 021

## Beschreibung

Die Erfindung betrifft ein Verfahren zum prädikativen Ermitteln eines Parameterwertes gemäß dem Oberbegriff des Anspruchs 1. Des Weiteren betrifft die Erfindung eine Steuervorrichtung zum Ausführen des Verfahrens.

Auf dem Gebiet von Fahrassistenz- und Sicherheitssystemen für Fahrzeuge ist es erstrebenswert, möglichst umfassende, detaillierte Informationen über das Umfeld bzw. die Umgebung aufzeichnen und auswerten zu können, um eine Steuerung eines Fahrzeugs in Bezug auf die Umgebung zu optimieren. Wichtig sind Informationen über die Straßenbeschaffenheit, insbesondere die Oberfläche und ihren Reibwert, z.B. um zu vermeiden, dass ein Fahrassistenz- und Sicherheitssystem einen Fahrzustand zu abrupt oder zu spät ändert, also z.B. eine zu starke Bremsung einleitet, oder gar nicht erst vor einer Gefahrensituation warnt. Ist der Reibwert der Straßenoberfläche bzw. eine Reibwertänderung in einem Bereich der Straßenoberfläche bekannt, kann beispielsweise ein zu erwartender Bremsweg abgeschätzt und eine Bremsung früh genug und mit der richtigen Dosierung eingeleitet werden. Der Reibwert ist somit eine wichtige Größe, über welche ein Eingriff durch ein Fahrassistenz- und Sicherheitssystem in eine Fahrdynamik des Fahrzeugs gesteuert werden kann, sofern der Reibwert ausreichend genau abgeschätzt oder bestimmt werden kann.

Zwar bietet sich heute bereits die Möglichkeit, Information über den Reibwert von vorausfahrenden Fahrzeugen zu erhalten, jedoch ist es erstrebenswert, den Reibwert einer vorausliegenden Straßenoberfläche durch das jeweilige Fahrzeug eigenständig möglichst genau bestimmen zu können. Ein Nachteil bei von vorausfahrenden Fahrzeugen übermittelten Informationen, insbesondere Reibwerten, ist auch die möglicherweise nicht mehr gegebene Aktualität der Information: die Situation kann sich z.B. durch Regenfälle, Ölspuren oder irgendwelche Hindernisse schlagartig ändern. Eine eigenständige Bestimmung oder zumindest Schätzung des Reibwertes sollte dabei wenn möglich auch dann erfolgen können, wenn das Fahrzeug ohne Lenk-, Brems- oder Beschleunigungsaktivität auf der Straßenoberfläche rollt, also unabhängig von einem Fahrzustand des Fahrzeugs, insbesondere unabhängig von einer auf das Fahrzeug einwirkenden Reibkraft.

Die Patentschrift DE 10 2004 023 323 B4 zeigt eine Vorrichtung und ein Verfahren zum Erfassen eines Zustands einer Straßenoberfläche für ein Fahrzeug mittels eines spektral auflösenden Strahlungsempfängers wie z.B. einer Nachtsichtkamera mit Wärmestrahlungserfassung (Pyrometer), wobei die Straßenoberfläche über einen Reibwert charakterisiert wird, der aus einem Temperaturverlauf in dem erfassten Wärmebild ermittelt wird, und wobei durch dem Strahlungsempfänger vorgeschaltete Abbildungs-Vergrößerungsmittel der erfasste Bereich der Straßenoberfläche definiert werden kann, insbesondere ein durch eine absolute Länge vorgegebener Bereich von z.B. 50 bis 100 Metern vor dem Fahrzeug. Der Zustand der Straßenoberfläche kann ohne eigene Strahlungssender erfasst werden, also allein über das Auswerten von ohnehin auf das Fahrzeug einfallende (Licht-)Strahlung. Ferner kann das Abbildungs-Vergrößerungsmittel als ein Mittel zum Nachführen eines Straßenverlaufs weitergebildet sein, so dass der erfasste Bereich auch in Bezug auf Kurven oder abfallende Straßenabschnitte definiert werden kann.

Die EP 2 282 293 A1 beschreibt ein Verfahren zur Bestimmung eines Bereichs von Interesse in einem Bild, insbesondere für ein Fahrerassistenzsystem zur Ermittlung der Sichtweite bei Nebelbedingungen. Dabei kann aus einer erfassten Darstellung des Fahrzeugumfelds ein zweckdienlicher Bereich herausgezogen und ausschließlich dieser verarbeitet werden, mit dem Ziel, die auszuwertende Datenmenge zu reduzieren.

Die DE 10 2005 045 017 A1 beschreibt ein Verfahren und ein Fahrerassistenzsystem zur sensorbasierten Anfahrsteuerung eines Kraftfahrzeugs. Dabei wird das Vorfeld des Fahrzeugs erfasst und nach einem Halt des Fahrzeugs ein Anfahrfreigabesignal ausgegeben, wenn die Verkehrssituation es erlaubt. Dazu wird anhand eines Feigabekriteriums überprüft, ob die Fahrbahn frei ist. Dies erfolgt nicht, indem Hindernisse anhand vorgegebener Merkmale der Hindernisse erkannt werden, sondern anhand der positiven Erkennung von Merkmalen einer hindernisfreien Fahrbahn, z.B. durch Sensordaten, die durch eine "leere" Fahrbahnoberfläche dominiert werden, d.h. eine ausgedehnte Fläche mit geringer Textur.

Es ist eine Aufgabe der Erfindung, ein Verfahren oder eine Vorrichtung bereitzustellen, mittels welchem bzw. welcher die Beschaffenheit einer Straßenoberfläche durch Auswerten von durch ein Fahrzeug erfassten Messdaten charakterisiert werden kann und die durch die Auswertung erhaltene Information auf möglichst zweckdienliche Weise für das Fahrzeug bereitgestellt werden kann.

Diese Aufgabe wird durch ein Verfahren mit den Merkmalen des Patentanspruchs 1 sowie durch eine Steuervorrichtung mit den Merkmalen des nebengeordneten Patentanspruchs gelöst. Vorteilhafte Ausgestaltungen mit zweckmäßigen Weiterbildungen der Erfindung sind in den abhängigen Patentansprüchen angegeben.

Die Erfindung geht aus von einem Verfahren zum prädikativen Ermitteln eines Parameterwertes einer von einem Fahrzeug befahrbaren Oberfläche und Bereitstellen des Parameterwertes an mindestens ein Fahrerassistenzsystem des Fahrzeugs, durch Erfassen einer Gesamtoberfläche, die zum Befahren mit dem Fahrzeug vorgesehen ist, insbesondere durch Erfassen von von der Gesamtoberfläche ausgehender Strahlung.

Erfindungsgemäß ist vorgesehen, dass dabei die folgenden Schritte ausgeführt werden:
- Bestimmen eines Teilbereichs innerhalb der Gesamtoberfläche, der von dem Fahrzeug tatsächlich befahrbar ist, und
- Ermitteln des Parameterwertes ausschließlich für den Teilbereich.

Durch das Ausblenden von nicht befahrbaren Abschnitten bzw. Teilbereichen kann zum einen die auszuwertende Datenmenge reduziert werden. Zum anderen können Fehlanalysen vermieden werden, insbesondere weil z.B. Straßenabschnitte ausgenommen werden können, auf welchen ein Fahrzeug mit einem wärmeabstrahlenden Unterboden geparkt ist. In diesem Abschnitt bzw. Bereich ist der Parameterwert, insbesondere Reibwert verändert, aber das Fahrzeug kann den Bereich nicht nutzen, so dass eine Verarbeitung dieser Information und Weitergabe an ein Fahrassistenzsystem nicht zweckdienlich wäre.

In den meisten Fällen wird die Oberfläche durch eine Straße mit einem bestimmten Straßenverlauf (vor-)gegeben sein, also z.B. aus einer Straßendatenbank bekannt sein, jedoch ist das beschriebene Verfahren ebenso auch bei einer Oberfläche ohne definierbaren Verlauf, wie z.B. einem Parkplatz, ausführbar. Die Gesamtoberfläche kann zum einen auf einen vorgebbaren Teilbereich der von dem Fahrzeug nutzbaren Oberfläche (insbesondere einen Straßen- oder Fahrbahnverlauf) eingeschränkt werden, zum anderen auf einen befahrbaren Teilbereich, also einen Bereich, in welchem keine für das Fahrzeug nicht überwindbaren Hindernisse (Objekte oder Subjekte) vorgesehen sind. Die Hindernisse können also auch beweglich sein, müssen nicht feststehend sein. Ein Hindernis kann z.B. auch durch ein entgegenkommendes Fahrzeug gebildet sein oder ein sich z.B. quer zur Fahrtrichtung verlagerndes Hindernis.

Dabei beruht die Erfindung auch auf der Erkenntnis, dass es nicht notwendigerweise erforderlich ist, einen Straßenverlauf oder die absolute Position des Fahrzeugs zu ermitteln und auszuwerten, sondern dass eine verbesserte (Daten-)Grundlage bereits dadurch bereitgestellt werden kann, dass auf der (Straßen-)Oberfläche selbst eine Analyse dahingehend stattfindet, welche Teilbereiche nicht von Relevanz sind und ausgenommen werden können bei der weiteren Ermittlung von Parameterwerten. Dies führt bereits in einem einfachen Verfahrensstadium, nämlich noch bei der Auswertung von die Oberfläche bzw. Straße charakterisierenden Umgebungsdaten, zu einer gefilterten und fehlerbereinigten Datengrundlage. Nicht überfahrbare Hindernisse, die meist auch einen Einfluss auf den Parameterwert, insbesondere Reibwert haben, speziell aufgrund von Temperaturänderungen, sind damit der Indikator, der zur Ausblendung von Teilbereichen der Oberfläche genutzt werden kann. Mit anderen Worten kann durch das beschriebene Verfahren eine fehlersichere Analyse bereits auf Grundlage von relativen Daten ohne Bezug zu einer absoluten geographischen Position oder dem Straßenverlauf erfolgen.

Als ein prädikatives Ermitteln ist dabei ein vorausschauendes Ermitteln zu verstehen, bei welchem nicht durch das Fahrzeug an dem Fahrzeug gemessene physikalische Größen wie eine Reibung zwischen einem Reifen und der Fahrbahnoberfläche im aktuell befahrenen Abschnitt der Straße bestimmt werden, sondern ein noch zu befahrender Abschnitt der Straße untersucht wird, insbesondere durch Auswerten von Strahlung, die von dem noch zu befahrenden Abschnitt der Straße emittiert wird.

Gemäß einem vorteilhaften Ausführungsbeispiel wird der Teilbereich bestimmt, indem ein durch das Fahrzeug nicht überfahrbares Hindernis auf der Gesamtoberfläche ermittelt wird. Das Erfassen von Hindernissen kann z.B. dadurch erfolgen, dass ein Vergleich von erfassten Bildbereichen bzw. Bildpunkten mit hinterlegten Standard-Geometrien erfolgt, z.B. einem Heck eines Fahrzeugs, oder dem Umriss einer Person, oder dass ein erfasstes Bild in bestimmten Koordinatenrichtungen nach vorgebbaren Konturen oder Geometrien untersucht wird. Wahlweise kann zusätzlich zu dem Vergleich mit hinterlegten Standard-Geometrien oder ausschließlich ein Bereich über der (Straßen-)Oberfläche nach sich in einer vertikalen Ausrichtung im Winkel zu der Straßenoberfläche erstreckenden Konturen untersucht werden.

Das Erfassen des Hindernisses kann z.B. durch eine an dem Fahrzeug vorgesehene Umfelderfassungseinrichtung wie z.B. ein Radargerät erfolgen, es kann jedoch auch basierend auf einer Datengrundlage erfolgen, die durch das Erfassen der Gesamtoberfläche erzeugt wurde.

Gemäß einem vorteilhaften Ausführungsbeispiel wird die Gesamtoberfläche durch Auswerten von auf das Fahrzeug einfallender Strahlung erfasst. Die einfallende Strahlung kann wahlweise von dem Fahrzeug selbst emittiert worden sein, also eigene reflektierte Strahlung sein, oder aber auch Strahlung sein, die ohne ein Strahlungsaussendegerät auf das Fahrzeug einfällt, also Tageslicht oder künstliches Licht in einem beleuchteten Tunnel.

Gemäß einem vorteilhaften Ausführungsbeispiel wird als Parameterwert ein die Reibung zwischen einem Reifen des Fahrzeugs und der Oberfläche in dem Teilbereich charakterisierender Reibwert genutzt. Der Reibwert ist ein für die Fahrzeugsteuerung bedeutender Parameterwert, da er vorgibt, welche Manöver auf der Oberfläche möglich sind, ohne einen sicheren Fahrzustand zu verlassen. Der Reibwert kann z.B. aus einem von einer Wärmebildkamera erfassten Wärmebild bestimmt werden. Der Parameterwert kann sich aber auch (wahlweise zusätzlich) auf ein Material der Fahrbahnoberfläche beziehen, sei es eine Teerdecke, Beton, oder Kopfsteinpflaster.

Gemäß einem vorteilhaften Ausführungsbeispiel wird die Gesamtoberfläche durch Erfassen von Wärmestrahlung erfasst, insbesondere mittels einer Umfelderfassungseinheit. Dabei können den Parameter charakterisierende Straßenoberflächendaten aus einem aus der Wärmestrahlung gewonnenen Wärmebild extrahiert werden, indem ein Temperaturverlauf in dem Wärmebild analysiert wird und eine Parameterwertänderung aus dem Wärmebild ermittelt wird, insbesondere mittels der Umfelderfassungseinheit oder einer von dieser separaten Steuervorrichtung. Mit anderen Worten beinhalten die Straßenoberflächendaten bereits den Hinweis oder Information darüber, in welcher Weise sich der Parameterwert ändert, insbesondere ortsbezogen, und die Straßenoberflächendaten können in einer Variante des Verfahrens mit Umfelddaten in Bezug gesetzt werden, um das Erfassen und Auswerten in Bezug auf einen spezifischen Straßenverlauf durchführen zu können. Es wird also nicht direkt der Parameterwert selbst erfasst, sondern zunächst eine Datengrundlage geschaffen, für welche dann ein oder mehrere bestimmte Parameter, insbesondere ein Reibwert oder eine Oberflächenrauhigkeit, festgelegt werden können und die Auswertung der Daten bezüglich dieser Parameter bzw. dieses Parameters erfolgt. Handelt es sich z.B. um eine Schotter- oder Kiesstrasse, so kann ein Reibwert viel schwerer ermittelt werden als bei einer gleichförmig geteerten Straßen, und es kann zweckdienlich sein, die Straßenoberflächen bezüglich des Materials der Straße, der Körnung (Größe der Kiesel), der Temperatur und/oder irgendwelcher Verunreinigungen wie Blätter, Ölfilme, Feuchtigkeit usw. auszuwerten.

Durch das Erfassen von Reibwertänderungen können Bereiche der Oberfläche bestimmt werden, in welchen ein besonderes Gefährdungspotential gegeben ist, da sich hier die Reibung meist plötzlich verändert, was zu einem unsicheren Fahrzustand führen kann, speziell in Kurven. Selbst wenn ein Fahrzeug durch ESP oder andere Fahrdynamiksteuerungssysteme geregelt wird, kann eine plötzliche Reibwertänderung zum Versagen dieser System führen. Durch die prädikative Bestimmung der Reibwertänderung können diese System vorgewarnt werden und ein Eingriff in die Fahrdynamik entsprechend gesteuert werden.

Gemäß einem vorteilhaften Ausführungsbeispiel werden der Teilbereich und der Parameterwert mittels einer Steuervorrichtung oder einem mit der Steuervorrichtung gekoppelten Fahrzeugsystem ausgewertet, wobei geprüft wird, ob eine Funktion des Fahrzeugs anzusteuern ist. Hierdurch kann eine Steuerung des Fahrzeugs erfolgen, insbesondere auch in Bezug auf weitere Daten wie z.B. Daten zu einem Straßenverlauf und/oder einer absoluten oder relativen Fahrzeugposition, wie im Folgenden näher beschrieben.

Wahlweise können in Verbindung mit dem beschriebenen Verfahren auch ein Straßenverlauf und die geographische Fahrzeugposition berücksichtigt werden. Mit anderen Worten können die Parameterwerte derart bereitgestellt werden, dass eine Steuerung des Fahrzeugs durch ein Fahrerassistenzsystem speziell im Hinblick auf den Straßenverlauf und wahlweise auch die relative Position des Fahrzeugs auf der Straße ermöglicht ist. Hierzu ist das im Folgenden näher beschriebene Verfahren geeignet, welches eine Weiterbildung des zuvor beschriebenen Verfahrens darstellt.

Ein Verfahren zum Bereitstellen eines eine Straßenoberfläche charakterisierenden Parameterwertes in Bezug auf einen vorausliegenden Straßenverlauf sowie auf eine geografische Position und eine Fahrtrichtung eines die Straße nutzenden Fahrzeugs für mindestens ein Fahrerassistenzsystem des Fahrzeugs, weist die folgenden Schritte auf:
a) Abrufen von geographischen Echtzeit-Positionsdaten zu der Fahrzeugposition des Fahrzeugs sowie Erfassen der Fahrtrichtung des Fahrzeugs;
b) Erfassen von Umfelddaten in einem vorgebbaren Umfeld um die Fahrzeugposition mittels einer Umfelderfassungseinheit;
c) Auswerten der Umfelddaten zum Erkennen von Straßendaten zumindest von der genutzten Straße in dem Umfeld, und Zuordnen des Fahrzeugs zu der Straße mittels einer Steuervorrichtung;
d) Bestimmen der Fahrzeugposition auf der Straße durch Kombinieren der Straßendaten mit den Positionsdaten mittels der Steuervorrichtung;
e) Bestimmen des Straßenverlaufs aus den Straßendaten in Bezug auf die Fahrtrichtung;
f) Erfassen von Wärmestrahlung, die von der Straßenoberfläche reflektiert und/oder emittiert wird, und Erzeugen von Straßenoberflächendaten;
g) Ermitteln des die Straßenoberfläche charakterisierenden Parameterwertes, insbesondere eines Reibwertes, aus den Straßenoberflächendaten;
h) Auswerten des Straßenverlaufs zusammen mit dem Parameterwert;
i) Bereitstellen der Fahrzeugposition, des Straßenverlaufs, und des Parameterwerts, insbesondere des Reibwerts;
   wobei die Schritte weitergebildet sein können durch:
   - beim Auswerten der Umfelddaten oder Straßenoberflächendaten: Bestimmen eines nicht befahrbaren Abschnitts bzw. Teilbereichs der Straße, insbesondere aus den Umfelddaten, und insbesondere durch Ermitteln von durch das Fahrzeug nicht überfahrbaren Hindernissen auf der Straße, insbesondere indem ein Bereich über der Straßenoberfläche nach sich in einer vertikalen Ausrichtung im Winkel zu der Straßenoberfläche erstreckenden Konturen untersucht wird;
   - beim Bestimmen oder Auswerten des Straßenverlaufs: Ausblenden des nicht befahrbaren Abschnitts bzw. Teilbereichs aus den Umfelddaten und Auswerten des verbleibenden, befahrbaren Abschnitts bzw. Teilbereichs;
      und
   - in Schritt i): Bereitstellen des Straßenverlaufs und des Parameterwertes, insbesondere ortsbezogen auf den befahrbaren Abschnitt bzw. Teilbereich, indem die Straßenoberflächendaten mit den verbleibenden nicht ausgeblendeten Umfelddaten kombiniert werden.

Die Umgebungsdaten können z.B. durch eine Kartendatenbank eines Navigationssystems bereitgestellt werden und/oder in Echtzeit für den relevanten geografischen Bereich jeweils aktuell abgerufen werden. Das vorgebbare Umfeld kann z.B. durch eine geometrisch fest oder variabel definierbare Zone um das Fahrzeug eingegrenzt werden.

Das Abrufen von geographischen Echtzeit-Positionsdaten des Fahrzeugs erfolgt bevorzugt durch ein fahrzeugeigenes GPS-System, welches GPS-Signale empfangen und auswerten kann. Daten zu einer Fahrtrichtung des Fahrzeugs können über den zeitlichen Verlauf der mittels der GPS-Signale empfangenen Positionsdaten erzeugt werden. Sie können jedoch auch über eine fahrzeugeigene Kompasseinrichtung bestimmt werden, welche Kompassdaten bzw. Fahrtrichtungsdaten in Bezug auf eine Mittenlängsachse des Fahrzeugs ausgeben kann.

Die Umgebungsdaten können wahlweise zumindest teilweise auch aus einer Speichereinheit des Fahrzeugs geladen werden, insbesondere in einem auf die Fahrtrichtung des Fahrzeugs bezogenen Umfeld.

Die geographischen Echtzeit-Positionsdaten können einer fahrzeugeigenen Speichereinheit übergeben werden, und mit bereits in der Speichereinheit hinterlegten Umgebungsdaten oder erst in Reaktion auf das Bestimmen der Position erfassten Umgebungsdaten korreliert werden.

Die fahrzeugeigene Speichereinheit kann als ein Zwischenspeicher ausgebildet sein, in welchen Kartendaten bzw. Umgebungsdaten nur zwischengespeichert werden, z.B. wenn sie aktuell über eine (Internet-)Verbindung abgerufen werden, sie kann aber auch alternativ oder zusätzlich als eine Art Festplattenspeicher ausgebildet sein, welcher die Umgebungsdaten fest gespeichert hat, so dass eine Kommunikation mit einer externen fahrzeugunabhängigen Kartendatenbank nicht notwendigerweise erforderlich ist.

Das Erfassen der Strahlung kann durch die Umfelderfassungseinheit erfolgen oder eine separate Strahlungserfassungseinheit. Die Strahlungserfassungseinheit kann z.B. als Wärmebildkamera ausgebildet sein. Das Erzeugen von Straßenoberflächendaten in Schritt f) kann durch die Steuervorrichtung oder wahlweise durch eine separate Auswerteeinheit erfolgen, welche einen Temperaturverlauf der Straßenoberfläche vor dem Fahrzeug aus einem Wärmebild der Strahlungserfassungseinheit, insbesondere einer so genannten NightVision Kamera, extrahiert, analysiert und daraus eine Reibwertänderung vor dem Fahrzeug ermittelt bzw. schätzt.

Dabei kann gemäß einer Variante des Verfahrens beim Überfahren eines Teils der Straße, für welchen eine zuvor geschätzte Reibwertänderung ermittelt wurde, eine Überprüfung der berechneten Daten erfolgen. Denn mbeim Überfahren der Bereiche kann meist auf einfachere und genauere Weise ein Reibwert bestimmt werden, insbesondere über die an den Reifen des Fahrzeugs erfassten Reibungswerte. Daraus kann eine Plausibilitätsprüfung im Hinblick auf die prädikativ geschätzten Reibwerte abgeleitet werden.

Zwar ist es zweckdienlich, z.B. im Hinblick auf die auszuwertende Datenmenge und die erforderliche Rechenzeit, nur einen Straßenverlauf in einem Nahumfeld in Fahrtrichtung vor dem Fahrzeug zu bestimmen, jedoch kann das Nahumfeld auch konzentrisch um das Fahrzeug oder elliptisch mit der längeren Achse der Ellipse in Fahrtrichtung um das Fahrzeug angeordnet sein, um einem Fahrassistenzsystem auch Information zu einer Umgebung bzw. einem Umfeld im Heckbereich des Fahrzeugs, also seitlich und hinter dem Fahrzeug, bereitzustellen. Für den Fall dass das Fahrzeug stillsteht, also nicht in einer bestimmten Richtung fährt, dann die Fahrtrichtung durch die Mittenlängsachse des Fahrzeugs definiert sein, d.h., die Positionsdaten können auch ohne zeitliche Änderung dahingehend ausgewertet werden, dass bei einem abgestellten Fahrzeug bekannt ist, in welche Richtung der Bug des Fahrzeugs weist, um das erfindungsgemäße Verfahren in Bezug auf die Fahrtrichtung ausführen zu können.

Das Bestimmen oder Erfassen von Straßendaten, insbesondere das Extrahieren von Bereichen aus den erfassten Bilddaten, welche der genutzten Fahrbahn entsprechen, kann wahlweise in Schritt c) und/oder Schritt g) erfolgen, also basierend auf den durch die Umfelderfassungseinheit bereitgestellten Daten und/oder den durch die Strahlungserfassungseinheit bereitgestellten Daten.

In Schritt g) kann die Umfelderfassungseinheit in einer vertikalen Richtung, also im Wesentlichen senkrecht zu einer Straßenoberfläche, die Höhe der Hindernisse erfassen und vorgeben, ab wann es sich um ein nicht durch das Fahrzeug überfahrbares Hindernis handelt. Mit anderen Worten wird die Straßenoberfläche bzw. der Bereich unmittelbar über der Straßenoberfläche auf Vertikalsprünge untersucht, also auf Konturen, die sich in einer vertikalen Richtung erstrecken.

Bevorzugt erfolgt das Ermitteln in Schritt g) in Abhängigkeit des Straßenverlaufs. Hierdurch kann die Analyse der Fahrbahnoberfläche auf diejenigen Bereiche fokussiert werden, die von dem Fahrzeug erwartungsgemäß durchfahren werden.

Durch den Schritt h) kann z.B. ermittelt werden, ob in einem besonders kurvigen Bereich der Straße mit einer höheren Glätte, also einem niedrigeren Reibwert zu rechnen ist. Hierdurch kann ein vorausschauenderes, sichereres Steuern des Fahrzeugs erfolgen.

Das Auswerten des Straßenverlaufs zusammen mit dem Parameterwert in Schritt h) erfolgt bevorzugt, indem der Parameterwert auf den Straßenverlauf bezogen wird und indem ein Auswerten einer Änderung des Parameterwerts erfolgt und ein Beziehen des Parameterwerts auf bestimmte Abschnitte des Straßenverlaufs erfolgt, falls sich der Parameterwert in den bestimmten Abschnitten des Straßenverlaufs ändert. Hierdurch kann z.B. eine besonders enge Kurve untersucht werden und eine Änderung des Parameterwertes in diesem Bereich kann zu einer stärkeren vorausschauenden Maßnahme bzw. einer deutlicheren Warnmeldung jeweils durch das Fahrerassistenzsystem führen als wenn die Änderung in einem gerade verlaufenden Abschnitt der Straße auftreten würde. Dies erhöht die Fahrsicherheit. In Schritt i) erfolgt demnach bevorzugt ein Bereitstellen der Fahrzeugposition und des Straßenverlaufs mit dem darauf bezogenen Parameterwert, insbesondere dem Reibwert.

Das Kombinieren der Straßenoberflächendaten mit den Umfelddaten in Schritt i) kann dazu genutzt werden, Abschnitte der Straße in einem zweiten Schritt auch dann auszublenden, wenn eine Änderung der Parameterwerte im Zusammenhang mit einem auf der Straße befindlichen Hindernis steht. Denn das Hindernis muss umfahren werden, was meist mit einer Änderung des Fahrzustands des Fahrzeugs einhergeht, und bei der Änderung des Fahrzustands ist der Reibwert von besonderer Bedeutung.

Zusammenfassend kann zum Ermitteln des Straßenverlaufs erwähnt werden, dass gemäß einer Variante des Verfahrens der Straßenverlauf mittels eines mathematischen Kameramodells in Bildpunktkoordinaten eines Wärmebildes umgerechnet wird, die potentiell auszuwerten sind. Davon können vor der Auswertung des Oberflächenparameters die Bildbereiche ausgeblendet werden, welche erfassten, vom Kameramodell umgerechneten Hindernissen entsprechen. Somit wird im erfassten Wärmebild keine nicht befahrbare Oberfläche wiedergegeben, die das Ergebnis verfälschen könnte. Dabei kann das Ermitteln des Straßenverlaufs auch auf dreidimensionale Art und Weise erfolgen, also im Hinblick auf alle drei Raumrichtungen.

Der ermittelte Verlauf der Fahrbahn kann unter Berücksichtigung der ausgeblendeten nicht befahrbaren Abschnitte für weitere Schritte des Verfahrens genutzt werden, insbesondere die Schritte:
k) Abrufen von Fahrzustandsdaten zu einem Fahrzustand des Fahrzeugs; und
I) Betreiben von mindestens einer Funktion des Fahrzeugs in Abhängigkeit der Fahrzeugposition, des Straßenverlaufs, des Parameterwertes und in Abhängigkeit des Fahrzustands.

Diese Schritte können durch ein Fahrassistenzsystem übernommen werden, welches als Teilsystem des Fahrzeugsystems ausgebildet sein kann.

Wahlweise kann das Erfassen in Schritt b) und das Auswerten in Schritt c) und/oder das Bestimmen in Schritt e) und/oder das Erfassen in Schritt f) in einem Nahumfeld um das Fahrzeug erfolgt, insbesondere im Nahumfeld von 1 bis 1000, bevorzugt 10 bis 500, besonders bevorzugt 20 bis 200 Metern um das Fahrzeug. Wahlweise kann das Nahumfeld in Bezug auf die Fahrtrichtung und/oder in Bezug auf den Straßenverlauf definiert werden, also bei einer sich serpentinenartig erstreckenden Straße rechteckig oder gar quadratisch seitlich querab zu dem Fahrzeug definiert werden, oder bei einer sich im Wesentlichen in einer Richtung erstreckenden Landstraße langgezogen und linienförmig entlang der Landstraße in Fahrtrichtung erstrecken. Hierdurch kann die zu verarbeitende Datenmenge reduziert werden.

Wahlweise können die Umfelddaten zumindest teilweise aus einer Speichereinheit geladen werden und/oder über eine Kommunikationsschnittstelle, insbesondere online aus dem Internet, in das Fahrzeug geladen werden. Hierdurch kann das Verfahren auch auf Straßenbereiche ausgedehnt werden, die nicht durch eine Kamera, einen Laserscanner, ein Radargerät oder dergleichen Einrichtung erfassbar sind, also nicht sichtbar sind. Die ermöglicht z.B. eine erste grobe Erfassung des Straßenverlaufs und eine Vorwarnmöglichkeit, z.B. bei Kimmen, starken Kurven, tiefen Senken oder einem Versagen der auf Sicht arbeitenden Umfelderfassungseinheit.

Als online zugängliche Datenbank zum Laden der Luftbilddaten kann dabei eine beliebige Datenbank aufgefasst werden, in welcher bevorzugt möglichst aktuelle Luftbilddaten hinterlegt sind. Bevorzugt ist die Steuervorrichtung dazu ausgebildet, mit mehreren Online-Datenbanken zu verbinden, sei es gleichzeitig oder nacheinander, und zu prüfen, in welcher Online-Datenbank die Luftbilddaten für den interessierenden Bereich mit höherer Aktualität und/oder größerer bzw. besseren Auflösung (also detailliertere Luftbilddaten, insbesondere auch Luftbilddaten mit kleinerem Skalierungsfaktor, also aus einer geringeren Höhe aufgenommene Luftbilddaten) hinterlegt sind, um die Luftbilddaten mit der jeweils größeren Auflösung bzw. höheren Aktualität abzurufen.

Die Aufgabe wird auch durch eine Steuervorrichtung zum prädikativen Ermitteln eines Parameterwertes einer von einem Fahrzeug befahrbaren Oberfläche und Bereitstellen des Parameterwertes an mindestens ein Fahrerassistenzsystem des Fahrzeugs gelöst, wobei die Steuervorrichtung ausgebildet ist zum Auswerten von Oberflächendaten einer Gesamtoberfläche, die zum Befahren mit dem Fahrzeug vorgesehen ist,
und wobei erfindungsgemäß vorgesehen ist, dass die Steuervorrichtung ferner ausgebildet ist zum Bestimmen eines Teilbereichs innerhalb der Gesamtoberfläche, der von dem Fahrzeug tatsächlich befahrbar ist, und zum Ermitteln des Parameterwertes ausschließlich für den Teilbereich.

Das beschriebene Verfahren und die beschriebene Steuervorrichtung können in Verbindung mit einem Sicherheitssystem eingesetzt werden, welches mindestens eine Umfelderfassungseinheit aufweist und dazu ausgebildet ist, aus dem erfassten Umfeld einen Verlauf einer Straße zu bestimmen, sei es autonom oder in Verbindung mit von extern bereitgestellten (Karten-)Daten.

Die mit Bezug zu dem erfindungsgemäßen Verfahren vorgestellten Ausführungsformen und deren Vorteile gelten entsprechend für die beanspruchte Steuervorrichtung.

Die vorstehend in der Beschreibung genannten Merkmale und Merkmalskombinationen sowie die nachfolgend in der Figurenbeschreibung genannten oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen, wobei gleiche oder funktionsgleiche Elemente mit identischen Bezugszeichen versehen sind. Dabei zeigen:
- Fig. 1: in einer perspektivischen Draufsicht eine schematische Darstellung einer Fahrsituation eines Fahrzeugs auf einer Straße, wobei das Fahrzeug mit einem Fahrzeugsystem ausgebildet ist, welches eine Steuervorrichtung zum Steuern des Fahrzeugs gemäß einem erfindungsgemäßen Verfahren aufweist;
- Fig. 2: in einer perspektivischen Draufsicht eine schematische Darstellung einer weiteren Fahrsituation eines Fahrzeugs auf einer Straße, wobei das Fahrzeug mit einem Fahrzeugsystem ausgebildet ist, welches eine Steuervorrichtung zum Steuern des Fahrzeugs gemäß einem erfindungsgemäßen Verfahren aufweist;
- Fig. 3a: in einem schematischen Flussdiagramm ein Verfahren gemäß einem Ausführungsbeispiel der Erfindung;
- Fig. 3b: in einem schematischen Flussdiagramm ein Verfahren gemäß einem Ausführungsbeispiel der Erfindung, bei welchem ein Straßenverlauf und eine Fahrzeugposition berücksichtigt werden;
- Fig. 4: in einer schematischen Darstellung eine Steuervorrichtung gemäß einem Ausführungsbeispiel der Erfindung;
- Fig. 5a: in einer Draufsicht eine schematische Darstellung einer Situation bei einem Verfahren, mittels welchem alle Bereiche einer Straße in Abhängigkeit eines Straßenverlaufs erfasst werden; und
- Fig. 5b: in einer Draufsicht eine schematische Darstellung einer Situation bei einem erfindungsgemäßen Verfahren, mittels welchem nur befahrbare Bereiche einer Straße in Abhängigkeit eines Straßenverlaufs erfasst werden und nicht befahrbare Bereiche ausgeblendet werden können.

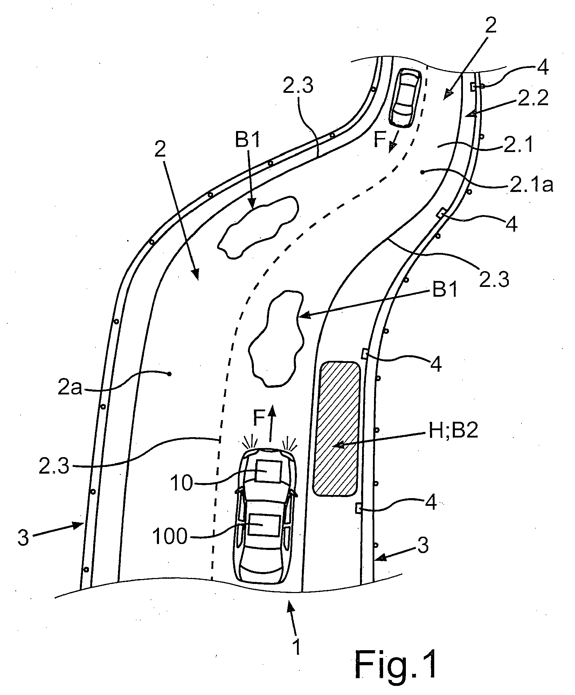

In der Fig. 1 ist ein Fahrzeug 1 gezeigt, welches eine Straße 2 nutzt. Die Straße 2 weist eine Straßenoberfläche 2a mit einer ortsabhängigen Beschaffenheit auf. Die Straße 2 weist zwei durch Fahrbahnmarkierungen 2.3 gekennzeichnete Fahrbahnen 2.1 mit einer jeweiligen Fahrbahnoberfläche 2.1 a auf. Die Fahrbahnoberflächen 2.1 a können aus demselben Material bestehen, oder aber auch aus voneinander abweichenden Materialien, z.B. zwei unterschiedliche Teersorten. Die Straße 2 weist ferner einen Seitenstreifen 2.2 auf und ist beidseitig von einer Leitplanke 3 begrenzt. Neben dem Seitenstreifen 2.2 sind Begrenzungspfosten 4 vorgesehen.

Das Fahrzeug 1 fährt in einer Richtung F auf einen gefährdeten Bereich B1 auf der rechten Fahrbahn 2.1 zu. Auf dem Seitenstreifen 2.2 ist ein nicht befahrbarer Bereich B2 angedeutet, z.B. ein durch ein Hindernis H blockierter Bereich. Das Fahrzeug 1 weist ein Fahrzeugsystem 100 auf, welches mit einer Steuervorrichtung 10 gekoppelt ist oder diese aufweist. Das Fahrzeugsystem 100 kann als Fahrerassistenzsystem ausgebildet sein oder ein solches aufweisen. Die Steuervorrichtung 10 ist dazu ausgebildet, einen Verlauf der Straße 2 zu erfassen und eine Bestimmung von Reibwerten der Straßenoberfläche 2a in Abhängigkeit des Straßenverlaufs sowie in Abhängigkeit von nicht befahrbaren Bereichen B2 vorzunehmen.

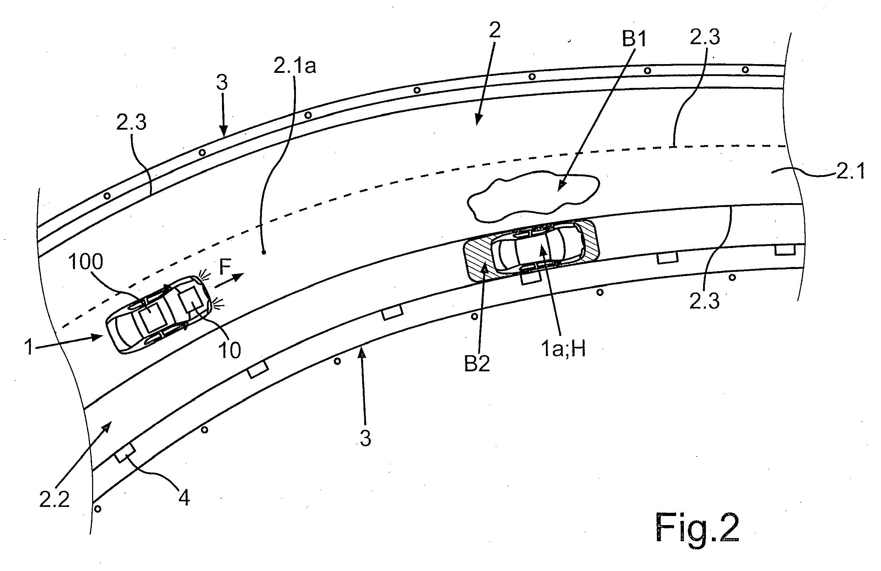

In der Fig. 2 ist eine Situation vergleichbar zu der in der Fig. 1 gezeigten Situation dargestellt. In diesem Fall wird ein Hindernis H durch ein abgestelltes Fahrzeug 1 a gebildet. Hieraus ergibt sich ein nicht befahrbarer Bereich B2, der in diesem Fall etwas größer ist als der von dem Fahrzeug 1a abgedeckte Bereich. Mit anderen Worten muss ein Fahrassistenzsystem berücksichtigen, dass bei hoher Geschwindigkeit ein gewisser Abstand zu dem abgestellten Fahrzeug 1 a eingehalten werden muss, selbst in einer Gefahrensituation bei einem Ausweichmanöver, bei welchem das gesteuerte Fahrzeug 1 von der Fahrbahn 2.1 runter gesteuert werden soll bzw. muss. Das Fahrzeug 1 weist ein Fahrzeugsystem 100 auf, welches eine Steuervorrichtung 10 aufweist. Das Fahrzeugsystem 100 kann als Fahrerassistenzsystem ausgebildet sein oder ein solches aufweisen.

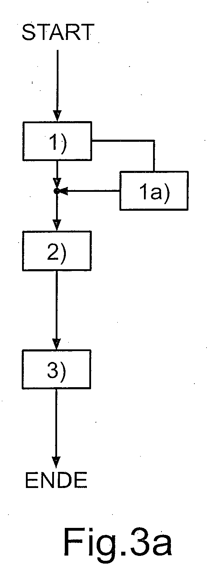

In der Fig. 3a ist in schematischer Darstellung gezeigt, dass ein Verfahren zum prädikativen Ermitteln eines Parameterwertes einer von einem Fahrzeug befahrbaren Oberfläche und Bereitstellen des Parameterwertes an mindestens ein Fahrerassistenzsystem des Fahrzeugs bereits durch eine sehr überschaubare Anzahl von Verfahrensschritten zu einer verbesserten Datengrundlage führen kann, insbesondere durch
einen ersten Schritt 1), in welchem ein Erfassen einer Gesamtoberfläche erfolgt, die zum Befahren mit dem Fahrzeug vorgesehen ist,
einen zweiten Schritt 2), in welchem ein Bestimmen eines Teilbereichs innerhalb der Gesamtoberfläche, der von dem Fahrzeug tatsächlich befahrbar ist, vorgesehen ist, und durch
einen dritten Schritt 3), in welchem ein Ermitteln des Parameterwertes ausschließlich für den Teilbereich vorgesehen ist. Wahlweise kann der Schritt 1) dadurch weitergebildet sein, dass die Gesamtoberfläche durch Erfassen von Wärmestrahlung erfasst wird, insbesondere mittels einer Umfelderfassungseinheit, und Straßenoberflächendaten aus einem aus der Wärmestrahlung gewonnenen Wärmebild extrahiert werden, indem ein Temperaturverlauf in dem Wärmebild analysiert wird und eine Parameterwertänderung aus dem Wärmebild ermittelt wird, insbesondere mittels der Umfelderfassungseinheit, oder einer von dieser separaten Steuervorrichtung.

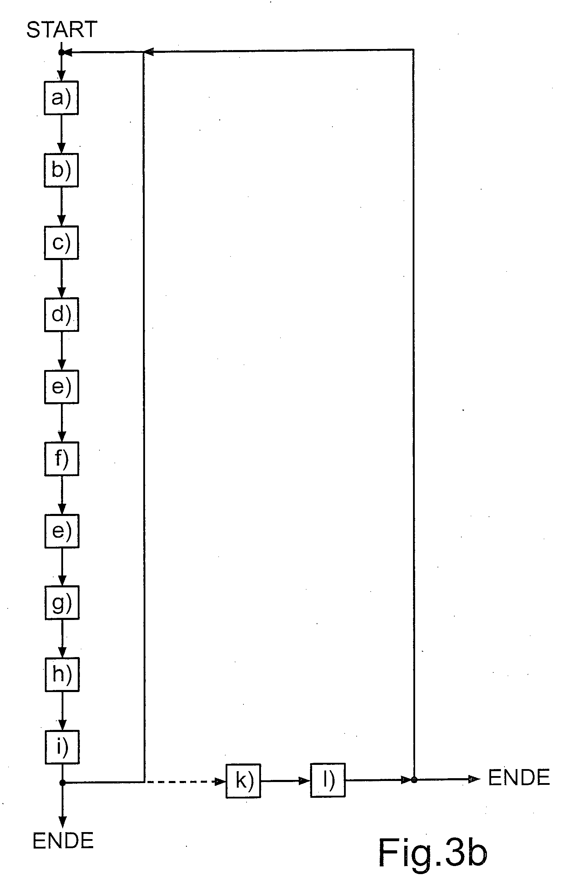

In der Fig. 3b ist in schematischer Darstellung gezeigt, auf weiche Weise ein erfindungsgemäßes Verfahren gemäß einem Ausführungsbeispiel ausgeführt werden kann, bei welchem ein Straßenverlauf und eine Fahrzeugposition berücksichtigt werden, insbesondere wenn es in Verbindung mit einem Fahrerassistenzsystem ausgeführt werden soll. Die einzelnen Schritte lassen sich wie folgt beschreiben und sind Teil eines Verfahrens zum Bereitstellen eines eine Straßenoberfläche charakterisierenden Parameterwertes in Bezug auf einen vorausliegenden Straßenverlauf sowie auf eine geografische Position und eine Fahrtrichtung eines die Straße nutzenden Fahrzeugs für mindestens ein Fahrerassistenzsystem des Fahrzeugs:
a) Abrufen von geographischen Echtzeit-Positionsdaten zu der Fahrzeugposition des Fahrzeugs sowie Erfassen der Fahrtrichtung des Fahrzeugs;
b) Erfassen von Umfelddaten in einem vorgebbaren Umfeld um die Fahrzeugposition mittels einer Umfelderfassungseinheit;
c) Auswerten der Umfelddaten zum Erkennen von Straßendaten zumindest von der genutzten Straße in dem Umfeld, und Zuordnen des Fahrzeugs zu der Straße mittels einer Steuervorrichtung;
d) Bestimmen der Fahrzeugposition auf der Straße durch Kombinieren der Straßendaten mit den Positionsdaten mittels der Steuervorrichtung;
e) Bestimmen des Straßenverlaufs aus den Straßendaten in Bezug auf die Fahrtrichtung;
f) Erfassen von Strahlung, die von der Straßenoberfläche reflektiert wird, und Erzeugen von Straßenoberflächendaten;
g) Ermitteln des die Straßenoberfläche charakterisierenden Parameterwertes, insbesondere eines Reibwertes, aus den Straßenoberflächendaten;
h) Auswerten des Straßenverlaufs zusammen mit dem Parameterwert;
i) Bereitstellen der Fahrzeugposition, des Straßenverlaufs, und des Parameterwerts, insbesondere des Reibwerts;
   wobei die einzelnen Schritte die folgende Ausprägung aufweisen:
   - beim Auswerten der Umfelddaten oder Straßenoberflächendaten: Bestimmen von nicht befahrbaren Abschnitten der Straße, insbesondere aus den Umfelddaten, durch Ermitteln von durch das Fahrzeug nicht überfahrbaren Hindernissen auf der Straße, insbesondere indem ein Bereich über der Straßenoberfläche nach sich in einer vertikalen Ausrichtung im Winkel zu der Straßenoberfläche erstreckenden Konturen untersucht wird;
   - beim Bestimmen oder Auswerten des Straßenverlaufs: Ausblenden der nicht befahrbaren Abschnitte, insbesondere aus den Umfelddaten, und Auswerten der verbleibenden, befahrbaren Abschnitte; und
   - in Schritt i): Bereitstellen des Straßenverlaufs und des Parameterwertes, insbesondere ortsbezogen auf die befahrbaren Abschnitte, indem die Straßenoberflächendaten mit den verbleibenden nicht ausgeblendeten Umfelddaten kombiniert werden.

Hierdurch kann die Auswertung genauer erfolgen, denn eine Fehlinterpretation von Parameterwerten kann effektiv vermieden werden, insbesondere bei der Auswertung des Parameterwertes basierend auf der Temperatur der Straßenoberfläche: Wärme, die von abgestellten Fahrzeugen auf die Fahrbahnoberfläche gestrahlt wird, führt nicht zu bei dem Steuern des Fahrzeugs zu berücksichtigenden Daten, denn diese Temperaturänderung kann mit dem abgestellten Fahrzeug (Hindernis) in Verbindung gebracht werden und ausgeblendet werden. Bevorzugt wird der Parameterwert nur für die Bereiche der Straße bestimmt, in welchen kein Hindernis vorliegt, also welche befahrbar sind und welche nicht ausgeblendet wurden. Das Ausblenden erfolgt also bevorzugt vor dem Bestimmen irgendwelcher Parameterwerte, insbesondere Reibwerte.

Der ermittelte Verlauf der Straße bzw. Fahrbahn kann unter Berücksichtigung der ausgeblendeten nicht befahrbaren Abschnitte für weitere Schritte des Verfahrens genutzt werden, insbesondere die Schritte:
k) Abrufen von Fahrzustandsdaten zu einem Fahrzustand des Fahrzeugs; und
I) Betreiben von mindestens einer Funktion des Fahrzeugs in Abhängigkeit der Fahrzeugposition, des Straßenverlaufs, des Parameterwertes und in Abhängigkeit des Fahrzustands.

Diese Schritte können durch ein Fahrassistenzsystem übernommen werden, welches als Teilsystem des Fahrzeugsystems ausgebildet sein kann.

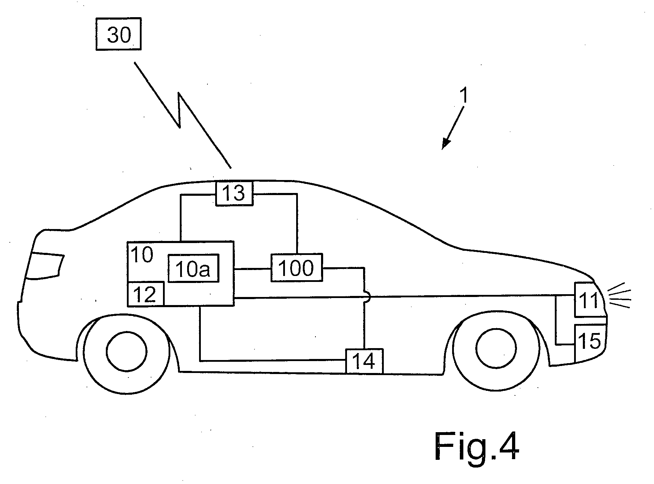

In der Fig. 4 ist eine in einem Fahrzeug 1 angeordnete Steuervorrichtung 10 mit einem Prozessor 10a und Speichermitteln 12 gezeigt, welche mit einer Positionserfassungseinrichtung 13, einem Fahrzeugsystem 100, einer Strahlungserfassungseinheit 11, einer Umfelderfassungseinheit 15 und mit einem Aktuator 14 gekoppelt ist. Der Aktuator 14 kann über die Steuervorrichtung 10 und/oder das Fahrzeugsystem 100 betätigt werden, insbesondere um den Fahrzustand des Fahrzeugs 1 einzustellen. Die Steuervorrichtung 10 und/oder das Fahrzeugsystem 100 sind über eine Kommunikationsschnittstelle in Kommunikation mit einem Datenserver 30, von welchem wahlweise Daten zu einem Verlauf der Straße oder zu bestimmten Merkmalen der Umgebung übertragen werden können.

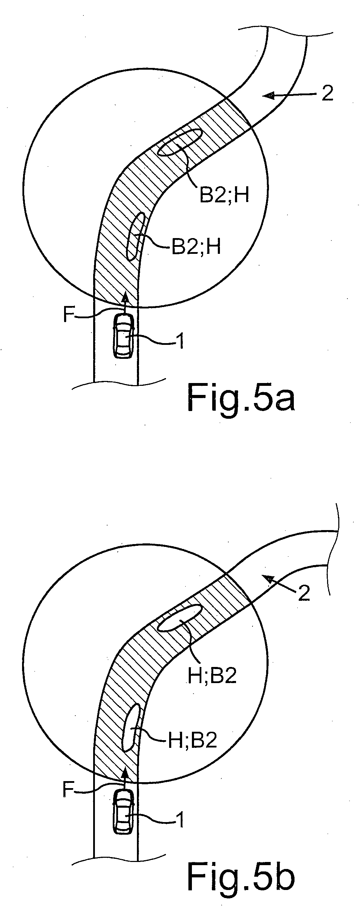

In der Fig. 5a ist gezeigt, dass bei einem Verfahren zum Erfassen von Parametern einer Straßenoberfläche ein Straßenverlauf der Straße 2 berücksichtigt werden kann, indem nur die Bereiche der Straße selbst erfasst werden, nicht aber die Umgebung. Ein die Straße 2 nutzendes Fahrzeug 1 erfasst einen definierten Bereich (umkreister Bereich) in Fahrtrichtung F vor dem Fahrzeug 1 und ermittelt den Verlauf der Straße und berücksichtigt nur die Bereiche der Straße 2 selbst, entsprechend dem gestrichelten Bereich, also nicht die Umgebung. Von diesem Bereich umfasst sind dabei Bereiche B2, in welchen ein nicht überfahrbares Hindernis H vorliegt.

In der Fig. 5b ist gezeigt, welche Bereiche bei einem erfindungsgemäßen Verfahren berücksichtigt werden können und welche Bereiche ausgeblendet werden können. Der gestrichelte Bereich, in welchem eine Auswertung von einem die Straßenoberfläche kennzeichnenden Parameter erfolgt, ist auf die befahrbaren Bereiche der Straße 2 beschränkt. Mit anderen Worten sind nicht befahrbare Bereiche B2, in welchen z.B. ein Hindernis H angeordnet sein kann, ausgeblendet worden, insbesondere bevor eine insbesondere ortsbezogene Auswertung des Parameters erfolgt.

## Patentansprüche

1. Verfahren zum prädikativen Ermitteln eines Parameterwertes einer von einem Fahrzeug (1) befahrbaren Oberfläche (2) und Bereitstellen des Parameterwertes an mindestens ein Fahrerassistenzsystem (100) des Fahrzeugs, durch
- Erfassen einer Gesamtoberfläche (2, 2.1, B1, B2), die zum Befahren mit dem Fahrzeug (1) vorgesehen ist,
**gekennzeichnet durch**
- Bestimmen eines Teilbereichs (2, 2.1, B1) innerhalb der Gesamtoberfläche (2, 2.1, B1, B2), der von dem Fahrzeug tatsächlich befahrbar ist, und
- Ermitteln des Parameterwertes ausschließlich für den Teilbereich (2, 2.1, B1).

2. Verfahren nach Anspruch 1, **dadurch gekennzeichnet, dass** der Teilbereich (2, 2.1, B1) bestimmt wird, indem ein durch das Fahrzeug nicht überfahrbares Hindernis (1 a, B2, H) auf der Gesamtoberfläche ermittelt wird.

3. Verfahren nach Anspruch 1 oder 2, **dadurch gekennzeichnet, dass** die Gesamtoberfläche (2, 2.1, B1, B2) durch Auswerten von auf das Fahrzeug einfallender Strahlung erfasst wird.

4. Verfahren nach einem der vorhergehenden Ansprüche, **dadurch gekennzeichnet, dass** als Parameterwert ein die Reibung zwischen einem Reifen des Fahrzeugs (1) und der Oberfläche in dem Teilbereich (2, 2.1, B1) charakterisierender Reibwert genutzt wird.

5. Verfahren nach einem der vorhergehenden Ansprüche, **dadurch gekennzeichnet, dass** die Gesamtoberfläche (2, 2.1, B1, B2) durch Erfassen von Wärmestrahlung erfasst wird, insbesondere mittels einer Umfelderfassungseinheit (15), und den Parameter charakterisierende Straßenoberflächendaten aus einem aus der Wärmestrahlung gewonnenen Wärmebild extrahiert werden, indem ein Temperaturverlauf in dem Wärmebild analysiert wird und eine Parameterwertänderung aus dem Wärmebild ermittelt wird, insbesondere mittels der Umfelderfassungseinheit (15) oder einer von dieser separaten Steuervorrichtung (10).

6. Verfahren nach einem der vorhergehenden Ansprüche, **dadurch gekennzeichnet, dass** der Teilbereich (1a, B2, H) und der Parameterwert mittels einer Steuervorrichtung (10) oder einem mit der Steuervorrichtung gekoppelten Fahrzeugsystem (100) ausgewertet werden und geprüft wird, ob eine Funktion des Fahrzeugs (1) anzusteuern ist.

7. Steuervorrichtung (10) zum prädikativen Ermitteln eines Parameterwertes einer von einem Fahrzeug (1) befahrbaren Oberfläche und Bereitstellen des Parameterwertes an mindestens ein Fahrerassistenzsystem (100) des Fahrzeugs (1), wobei die Steuervorrichtung (10) ausgebildet ist zum
- Auswerten von Oberflächendaten einer Gesamtoberfläche (2, 2.1, B1, B2), die zum Befahren mit dem Fahrzeug (1) vorgesehen ist,
**dadurch gekennzeichnet, dass** die Steuervorrichtung (10) ferner ausgebildet ist zum
- Bestimmen eines Teilbereichs (2, 2.1, B1) innerhalb der Gesamtoberfläche (2, 2.1, B1, B2), der von dem Fahrzeug tatsächlich befahrbar ist, und
- Ermitteln des Parameterwertes ausschließlich für den Teilbereich (2, 2.1, B1).

## Claims

1. A method for predictive determination of a parameter value of a surface (2) on which a vehicle (1) can drive and providing the parameter value to at least one driver assistance system (100) of the vehicle, the method comprising the steps of:
detecting a total surface (2, 2.1, B1, B2) that is provided for the vehicle (1) to drive on,
**characterized by**
- determining a partial region (2, 2.1, B1) within the total surface (2, 2.1, B1, B2), on which the vehicle can actually drive, and
- determining the parameter value only for the partial region (2, 2.1, B1).

2. The method according to claim 1, **characterized in that** the partial region (2, 2.1, B1) is determined by identifying an obstacle (1a, B2, H) on the total surface that is insurmountable by the vehicle.

3. The method according to claim 1 or 2, **characterized in that** the total surface (2, 2.1, B1, B2) is detected by evaluating radiation incident on the vehicle.

4. The method according to any of the preceding claims, **characterized in that** the parameter value comprises a coefficient of friction characteristic of friction between a tire of the vehicle (1) and a surface in the partial region (2, 2.1, B1).

5. The method according to any of the preceding claims, **characterized in that** the total surface (2, 2.1, B1, B2) is detected by detecting thermal radiation, in particular using a surroundings sensing unit (15), and **in that** the method further comprises extracting road-surface data characterizing the parameter value from a thermal image obtained from the thermal radiation, analysing a temperature profile in the thermal image, and determining from the thermal image a change in the parameter value, in particular using the surroundings sensing unit (15) or a control device (10) that is separate from the surroundings sensing unit.

6. The method according to any of the preceding claims, **characterized by** evaluating the partial region (1a, B2, H) and the parameter value with a control device (10) or with a vehicle system (100) coupled to the control device, and checking whether a function of the vehicle (1) must be controlled.

7. A control device (10) for predictive determination of a parameter value of a surface on which a vehicle (1) can drive and providing the parameter value to at least one driver assistance system (100) of the vehicle (1), wherein the control device (10) is configured to
- evaluate surface data of a total surface (2, 2.1, B1, B2) that is provided for the vehicle (1) to drive on,
**characterized in that** the control device (10) is further configured to
- determine a partial region (2, 2.1, B1) within the total surface (2, 2.1, B1, B2), on which the vehicle can actually drive, and
- determine the parameter value only for the partial region (2, 2.1, B1).

## Revendications

1. Procédé pour déterminer de manière prédictive une valeur de paramètre d'une surface (2) pouvant être empruntée par un véhicule (1) et pour fournir la valeur de paramètre à au moins un système d'assistance au conducteur (100) du véhicule, par
- la détection d'une surface totale (2, 2.1, B1, B2), qui est prévue pour être empruntée par le véhicule (1),
**caractérisé par**
- la définition d'une zone partielle (2, 2.1, B1) à l'intérieur de la surface totale (2, 2.1, B1, B2), qui peut être empruntée dans les faits par le véhicule, et
- la détermination de la valeur de paramètre exclusivement pour la zone partielle (2, 2.1, B1).

2. Procédé selon la revendication 1, **caractérisé en ce que** la zone partielle (2, 2.1, B1) est définie **en ce qu'**un obstacle (1a, B2, H) ne pouvant pas être franchi par le véhicule est déterminé sur la surface totale.

3. Procédé selon la revendication 1 ou 2, **caractérisé en ce que** la surface totale (2, 2.1, B1, B2) est détectée par l'évaluation du rayonnement incident sur le véhicule.

4. Procédé selon l'une quelconque des revendications précédentes, **caractérisé en ce qu'**une valeur de frottement caractérisant le frottement entre un pneu du véhicule (1) et la surface dans la zone partielle (2, 2.1, B1) est utilisée en tant que valeur de paramètre.

5. Procédé selon l'une quelconque des revendications précédentes, **caractérisé en ce que** la surface totale (2, 2.1, B1, B2) est détectée par la détection d'un rayonnement thermique, en particulier au moyen d'une unité de détection de champ environnant (15), et des données de surface de route caractérisant le paramètre sont extraites d'une image thermique obtenue du rayonnement thermique **en ce qu'**une courbe de températures dans l'image thermique est analysée et une variation de valeur de paramètre est déterminée à partir de l'image thermique, en particulier au moyen d'une unité de détection de champ environnant (15) ou d'un dispositif de commande (10) séparé de cette dernière.

6. Procédé selon l'une quelconque des revendications précédentes, **caractérisé en ce que** la zone partielle (1a, B2, H) et la valeur de paramètre sont analysées au moyen d'un dispositif de commande (10) ou d'un système de véhicule (100) couplé au dispositif de commande, et il est vérifié si une fonction du véhicule (1) est à piloter.

7. Dispositif de commande (10) pour déterminer de manière prédictive une valeur de paramètre d'une surface pouvant être empruntée par un véhicule (1) et pour fournir la valeur de paramètre à au moins un système d'assistance au conducteur (100) du véhicule (1), dans lequel le dispositif de commande (10) est réalisé pour
- analyser des données de surface d'une surface totale (2, 2.1, B1, B2), qui est prévue pour être empruntée par le véhicule (1),
**caractérisé en ce que** le dispositif de commande (10) est réalisé en outre pour
- définir une zone partielle (2, 2.1, B1) à l'intérieur de la surface totale (2, 2.1, B1, B2), qui peut être empruntée dans les faits par le véhicule, et
- déterminer la valeur de paramètre exclusivement pour la zone partielle (2, 2.1, B1).
